(19) **Europäisches Patentamt**
**European Patent Office**
**Office européen des brevets**

(11) **EP 2 642 315 B1**

(12) **EUROPÄISCHE PATENTSCHRIFT**

(45) Veröffentlichungstag und Bekanntmachung des Hinweises auf die Patenterteilung:
**10.04.2024 Patentblatt 2024/15**

(21) Anmeldenummer: **13160306.0**

(22) Anmeldetag: **21.03.2013**

(51) Internationale Patentklassifikation (IPC):
**G01S 17/89** *(2020.01)* **G01S 7/497** *(2006.01)*

(52) Gemeinsame Patentklassifikation (CPC):
**G01S 7/497; G01S 17/894;** G01S 2007/4975

(54) **Erkennung von Signalstörungen eines optischen Sensors hervorgerufen durch Beschädigungen oder Verdeckungen**

Detection of optical sensor signal interference caused by damage or cover

Détection de perturbations de signaux d'un capteur optique, provoquées par des endommagements ou des recouvrements

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2012 DE 202012003277 U**

(43) Veröffentlichungstag der Anmeldung:
**25.09.2013 Patentblatt 2013/39**

(73) Patentinhaber: **iris-GmbH infrared & intelligent sensors**
**12439 Berlin (DE)**

(72) Erfinder:
• **Niemann, Kai-Uwe**
**13088 Berlin (DE)**
• **Bönick, Rainer**
**16845 Altgarz (DE)**

(74) Vertreter: **Eisenführ Speiser**
**Patentanwälte Rechtsanwälte PartGmbB**
**Stralauer Platz 34**
**10243 Berlin (DE)**

(56) Entgegenhaltungen:
**EP-A1- 2 018 047 EP-A1- 2 073 035**
**EP-A1- 2 372 389 JP-A- 2001 111 989**
**US-A1- 2006 251 293**

**Beschreibung**

## 1. Gebiet der Erfindung

Die Erfindung betrifft ein System zur Erkennung von Signalstörungen auf Basis eines bildgebenden optischen Sensors nach dem Prinzip der Abstandsmessung durch Lichtlaufzeitmessung als Pulslaufzeit oder als Phasenverschiebung von kontinuierlich moduliertem Licht. Solche Sensoren werden eingesetzt z.B. in der Lagertechnik, in führerlosen Transportsystemen, zur Zählung von Personen in Verkehrsmitteln oder Gebäuden, in der Sicherheitstechnik zur Zutrittskontrolle oder auch für Entertainment-Anwendungen.

Aufgrund des Wirkprinzips der Lichtlaufzeitmessung (englisch: Time of Flight, abgekürzt TOF) und der im Gegensatz zum Einelement-Empfänger hier vorhandenen Matrix aus Empfängerelementen werden solche Sensoren auch als TOF-Matrix-Sensoren bezeichnet.

Bei vielen dieser Anwendungen ist der Sensor möglichen Verschmutzungen, Verdeckungen oder Beschädigungen ausgesetzt. Diese Beeinträchtigungen der Sensoroberfläche können die Funktion des Sensors nachteilig beeinflussen, indem der gerichtete Lichtaustritt oder der Empfang von Licht gedämpft, abgelenkt oder verzerrt wird. Zum zuverlässigen Betrieb des übergeordneten Gesamtsystems ist es deshalb hilfreich, eine Information über den Zustand des Sensors hinsichtlich einer Beschädigung, Verdeckung oder sogar Teilverdeckung zu ermitteln und der Systemsteuerung zuzuführen. Damit kann die eigentliche Nutzinformation des Sensors wie z.B. Objektanwesenheit oder Objektgröße hinsichtlich ihrer Gültigkeit oder Güte bewertet werden. Weiterhin können Reinigungsmaßnahmen und Gerätereparatur bzw.- austausch zustandsabhängig ausgelöst werden. Dies ist im Allgemeinen kostengünstiger im Vergleich zu festen Wartungs- und Reinigungszyklen. Außerdem kann der Austausch eines beschädigten Sensors unmittelbar nach der entsprechenden Zustandsmeldung erfolgen, was die Zuverlässigkeit und Verfügbarkeit des Gesamtsystems deutlich erhöht. Durch eine Information über die Art der Störung kann die geeignete Abstellmaßnahme gewählt werden, z.B. Reinigung bei Bedeckung oder Sensortausch bei zerkratzter optischer Fläche.

## 2. Stand der Technik

Heutzutage werden abstandsmessende Sensoren in einer Vielzahl verschiedener Systeme eingesetzt. Das Auftreten unterschiedlicher Arten von Sensorstörungen oder von Signalstörungen, die sowohl durch zufällige Ereignisse, wie durch eine Verschmutzung der Sensoroberfläche, als auch durch gezielte Sabotageaktionen verursacht werden können, kann die Funktionalität solcher Systeme stark behindern.

DE 10 2006 045 916 B4 beschreibt eine Lichtschranke bzw. einen Lichttaster mit einer Möglichkeit zur Detektion von Verschmutzungen und flüssigen oder staubförmigen Belägen auf der Frontscheibe durch Auswertung der dadurch bewirkten Änderung der Totalreflexion innerhalb der Frontscheibe.

In DE 10 2004 015 040 A1, EP 1 507 138 B1, DE 102 619 23 A1 und DE 195 302 89 A1 sind Regensensoren beschrieben, welche dazu noch im Allgemeinen nur bei Benetzung mit transparenten Flüssigkeiten wie z. B. Wasser zuverlässig funktionieren und beispielsweise bei dem für Vandalismus üblichen Besprühen mit Farbe versagen.

Aus der Druckschrift EP 1 672 604 A1 aus dem Stand der Technik sind ein Verfahren sowie eine Einrichtung zur Detektion von Sabotage oder Sabotageversuchen an einer Überwachungskamera bekannt. Anhand der von der Kamera aufgenommenen Bilder wird jedes Bild mit einem früher aufgenommenen Referenzbild verglichen und daraus ein Korrelationswert gewonnen. Dieser Korrelationswert wird anschließend mit einer Alarmschwelle verglichen. Für die systembedingte Analyse werden die zweidimensionalen Intensitätsdaten der Kamera und deren Bildeigenschaften (Textur, Farbe usw.) verwendet.

Die grundsätzliche Idee des Systems aus der Druckschrift DE 10 2007 000 344 A1 besteht darin, einen Sensor mit Hilfe von anderen Sensoren abzusichern. Die in diesem System verwendeten Verfahren greifen auf zweidimensionale Intensitäts-Daten einer Videokamera zurück, auf deren Basis Bildmerkmale erzeugt werden, um sie mit Hilfe von Referenzwerten zu vergleichen und eine Signal- oder Sensorstörung zu melden. Das System ist stark abhängig von einer vorherigen Abstimmung und Synchronisierung seiner einzelnen Komponenten.

Mit dem Problem der Erkennung von Sabotage an einem Sensor beschäftigt sich zum auch die Druckschrift WO 00/57381 A1 aus dem Stand der Technik, die ein Verfahren und eine Vorrichtung zur Erfassung eines Maskierungsvorgangs beim Einschalten eines Bewegungsdetektors mit Hilfe eines Infrarotsensors und eines Mikrowellen-Doppler-Sensors beschreibt.

In der Druckschrift DE 196 039 35 A1 wird ein Verfahren zum Erkennen von Änderungen in einem Überwachungsbereich beschrieben. Die Funktionsweise dieses Verfahrens gleicht der Funktionsweise des Verfahrens aus der Druckschrift EP 1 672 604 A1.

Grundsätzlicher Nachteil dieser bekannten oder ähnlicher Systeme zur Erkennung von Sabotage an einem Sensor ist deren Kostenintensität. So mag zwar die Installation von Zusatzsensoren wie Bewegungssensoren, Glasbruchsensoren oder Drucksensoren die Erkennung von Störungen erleichtern, bringt anderseits aber auch hohe Installations- und Wartungskosten mit sich. Zudem analysieren alle vorgestellten Systeme nur die Helligkeitsinformation (Intensität) eines Sensorsignals bzw. Kamerabildes, was stark abhängig ist von der Umgebungslichtsituation bzw. dem Reflektionsgrad der Oberflächen im Gesichtsfeld.

In EP 2 372 389 A1 ist angedeutet, dass von einem einzigen Sensorelement erfasste Mehrfach-Reflektionen einen Hinweis auf ein verschmutztes optisches Fenster des Sensors geben können.

Weitere Beispiele von optischen Sensoren nach dem Lichtlaufzeit-Prinzip werden von US 2006/251293 A1 und EP 2 073 035 A1 offenbart.

## 3. Ziel der Erfindung

Die Aufgabe dieser Erfindung ist die vollautomatische Zustandserkennung des Sensors hinsichtlich vollständiger oder partieller Verdeckung, Verschmutzung, Manipulation, Beschädigung oder Zerstörung der für die Funktion wesentlichen Lichtaustrittsflächen.

Durch diese vollautomatische Zustandserkennung soll eine Fernwartung ermöglicht werden und der Wartungsaufwand durch zustandsabhängige Wartung optimiert werden.

Um Kosten zu sparen, sollen dafür keine zusätzlichen Bauelemente oder Schaltungen eingesetzt werden.

## 4. Kerngedanke der Erfindung

Zur Lösung der Aufgabe wird einerseits ein optischer Sensor nach dem Lichtlaufzeit-Prinzip zur Erfassung dreidimensionaler Szenen und ihrer zeitlichen Änderung gemäß Anspruch 1 vorgeschlagen, mit mindestens einem Sendeelement und einer Empfängermatrix (**3**) aus mehreren Empfängerelementen (**4**), mit einer Signalauswertungseinheit (**5**) zur Interpretation und Bewertung der Sensorsignale als Entfernungswerte für jedes Empfängerelement sowie mit einer Schnittstelle zur Ausgabe der Bewertungsergebnisse. Hierbei ist die Signalauswertungseinheit (**5**) ausgebildet, eine Erkennung von Beschädigungen und Bedeckungen des Sensors durch Bewertung der Entfernungssignale von mehreren Empfängerelementen hinsichtlich ihres jeweiligen Entfernungswertes und ihrer zeitlichen Veränderung im Vergleich mit vorher ermittelten Referenzwerten und/oder örtlichen Referenzmustern durchzuführen und das Ergebnis als Information über die Gültigkeit des Nutzsignals des Sensors über die Schnittstelle auszugeben.

Zur Lösung der Aufgabe wird weiterhin ein Verfahren gemäß Anspruch 6 zur Erkennung von Beschädigungen und Bedeckungen eines Sensors mit mindestens einem Sendeelement und einer Empfängermatrix (**3**) aus mehreren Empfängerelementen (**4**) vorgeschlagen. Das Verfahren umfasst die folgenden Schritte:

- Bewertung der Entfernungssignale von mehreren Empfängerelementen hinsichtlich ihres jeweiligen Entfernungswertes und ihrer zeitlichen Veränderung im Vergleich mit vorher ermittelten Referenzwerten und/oder örtlichen Referenzmustern und
- Ausgeben des Bewertungsergebnisses als Information über die Gültigkeit des Nutzsignals des Sensors über eine Schnittstelle.

Die Bewertung des Sensorsignals führt zu örtlichen und zeitlichen Zustandsinformationen, welche mit dem vorherigen Abstandsbild (t-1) in der Signalauswertungseinheit gespeichert und dann für spätere Vergleiche mit vorgegebenen Referenzen herangezogen werden.

Die Aufgabe wird erfindungsgemäß dadurch gelöst, dass die Information der Entfernungsdaten zur Erkennung einer Abdeckung oder Beschädigung genutzt wird. Durch Redundanz infolge der Auswertung mehrerer Empfängerelemente (**4**) wird diese Information deutlich zuverlässiger und unabhängig von Objekteigenschaften und Störungen im TOF-Matrix-Sensor (**1**).

Die vorliegende Erfindung betrifft ein System zur Erkennung von Signalstörungen durch Einwirkung von Sabotage oder Vandalismus an einem bildgebenden TOF-Matrix-Sensor (**1**), der auf Basis der Lichtlaufzeitmessung eine Abstandsmessung durchführt. Wurde eine Signalstörung erkannt, wird ein Meldesignal (Alarm/Warnung) ausgegeben, das in weiterführenden Schritten wie z.B. Analysen bzw. Verarbeitungen ausgewertet werden kann. Diese weiterführenden Schritte sind nicht Gegenstand dieses Erkennungssystems.

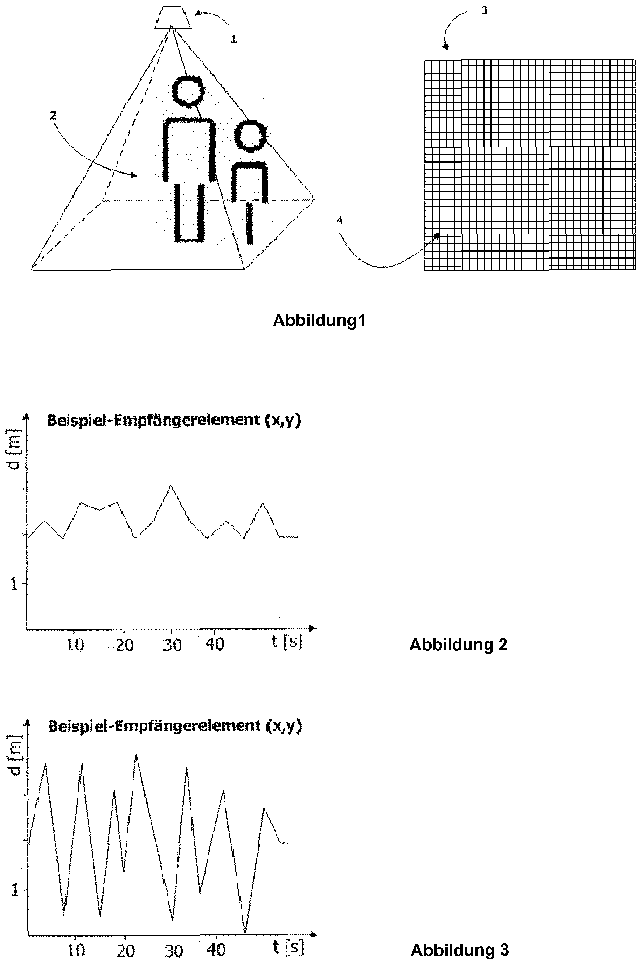

Die gewonnenen zweidimensionalen Bilddaten (**3**) sind metrische Entfernungen zwischen der bildaufnehmenden Sensorik und dem jeweilig betrachteten Target (Objekt oder Szenerie). Die Bilddaten (**3**) bestehen dabei aus Einzelbildelementen (**4**), den sog. Pixeln (Bildpunkte), die in einer zweidimensionalen Matrix (**Empfängermatrix**) (**3**) angeordnet sind. Die Bildaufnahme des TOF-Matrix-Sensors (**1**) erfolgt dabei kontinuierlich, so dass ein Videostrom aus Einzelbildern entsteht. Das maximale Gesichtsfeld (**2**) des TOF-Matrix-Sensors (**1**) ist dabei beschränkt durch die Ansteuerungsfrequenz der Nutzlicht emittierenden Dioden (Sendeeinheit). In **Abbildung** 1 ist der Gesichtsfeld (**2**) des TOF-Matrix-Sensors (**1**) schematisch dargestellt. Typische Installationshöhen des Sensors, z. B. in öffentlichen Verkehrsmitteln, liegen im Bereich von 2 m bis 2.5m.

Für die Erkennung von Signalstörungen werden einerseits Ortsinformationen innerhalb der Empfängermatrix (**3**) ausgewertet, andererseits werden diese Ortsinformationen über einen Zeitdauer T (**13**) betrachtet und ausgewertet. Dieser Zeitdauer T kann als Parameter vorgegeben werden. Wird dieser Zeitdauer (**13**) überschritten, so wird ein Meldesignal ausgegeben, dass weitergehend ausgewertet werden kann. Eine typische Zeitdauer, z.B. in öffentlichen Verkehrsmitteln, beträgt 10 bis 40 Sekunden.

Mit Hilfe des dargestellten Systems ist es nicht nur möglich festzustellen, dass eine Signalstörung vorliegt, sondern es wird auch eine Klassifizierung der Signalstörung vorgenommen, welche zusätzlich ausgegeben werden kann. Die zur Zeit erfüllten Klassen von Signalstörungen sind Abdeckungen (auch Verschmutzung) des Sensors und Beschädigungen am Sensor.

Bei **Abdeckung** des Bildaufnahmeelements (Optik, Empfangseinheit) gelangt kein oder nur noch wenig Nutzlicht an die Empfangseinheit des Sensors. Abdeckungen können durch Verdeckung des Sensors durch Gliedmaßen einer Person oder durch Materialien wie Aufkleber, Papier, Pappe oder auch Klebeband erfolgen. Dabei werden Entfernungswerte erzeugt, die maximal so groß sind, wie es die Lichtdurchlässigkeit des abdeckenden Materials zulässt.

Die Abstandswerte variieren dabei kaum innerhalb des Wertebereichs über eine gemessene Zeitdauer T (**13**). Dieser Bereich beschränkt sich im Allgemeinen nur auf wenige Zentimeter, hängt aber maßgeblich von der Lichtdurchlässigkeit des abdeckenden Materials ab. Die **Abbildung** 2 zeigt für solche Abdeckungen einen beispielhaften Verlauf der Abstandswerte eines Empfängerelements (**4**) über die Zeitdauer T (**13**).

Bei **Beschädigung** der Optikfläche wird das Nutzlicht auf der Empfängermatrix (**3**) entsprechend dem Grad der Beschädigung gedämpft. Eine solche Beschädigung ist z.B. die mutwillige Zerstörung der Empfangseinheit des Sensors durch Feuer oder Farbe (Graffiti). Bei einer hinreichend starken Beschädigung gelangt nahezu kein Nutzlicht an die Empfangseinheit des TOF-Matrix-Sensors (**1**). Der Nutzlichtpegel sinkt bis an die elektronische Rauschgrenze. Die Abstandswerte variieren ständig, da nur Rauschen gemessen werden kann. Dabei werden Abstandswerte innerhalb der Empfängermatrix (**3**) erzeugt, die im gesamten Abstands-Messbereich des Sensors (**2**) liegen, d. h. z. B. um mehrere Meter variieren können. Innerhalb einer vorgegebenen Zeitdauer T (**13**) schwanken die gemessenen Abstandswerte somit sehr stark. Wichtig ist, dass somit eher weniger der Grad der Beschädigung festgestellt werden kann, sondern nur ob eine Beschädigung vorliegt oder nicht. Die **Abbildung** 3 zeigt für Beschädigungen einen beispielhaften Verlauf der Abstandswerte eines Empfängerelements (**4**) über die zeitliche Dauer T (**13**).

Das vorliegende System nutzt somit die zeitliche Veränderung des Bildinhalts, auf Basis der **Sprunghaftigkeit** bzw. **Konstanz** der Signale der Empfängerelemente (**4**) gemessen über eine festgelegte Zeitdauer T (**13**). Ein als Grenzwert zu definierender Parameter (**12**) legt außerdem fest, wie groß der Anteil der zu untersuchenden Empfängerelemente (**4**) mindestens zu sein hat, um auch Teilabdeckungen (z.B. halbabgedeckter Sensor - entspricht der Hälfte der Empfängermatrix) robust erkennen zu können.

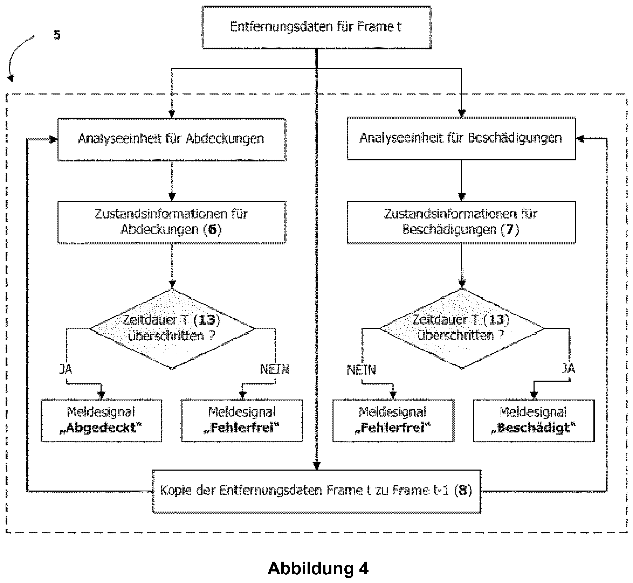

Die Speicherung von Zustands- und Bilddaten sowie die Durchführung der Funktionsweise sind innerhalb einer Signalauswertungseinheit (**5**) realisiert. Diese Einheit umfasst die Speicherung der Zustände der Empfängerelemente (**4**) für Abdeckungen (**6**) und Beschädigungen (**7**) sowie die Speicherung der Empfängermatrix für die Entfernungswerte (**8**) des vorherigen Frames t-1. Zustands- und Bilddaten haben alle die Größe n x m. Neben der Speicherung beinhaltet die Signalauswertungseinheit (**5**) ein Modul für die Erkennung von Abdeckungen sowie ein Modul für die Erkennung von Beschädigungen. Eine schematische Darstellung der Signalauswertungseinheit (**5**) wird in **Abbildung** 4 gezeigt.

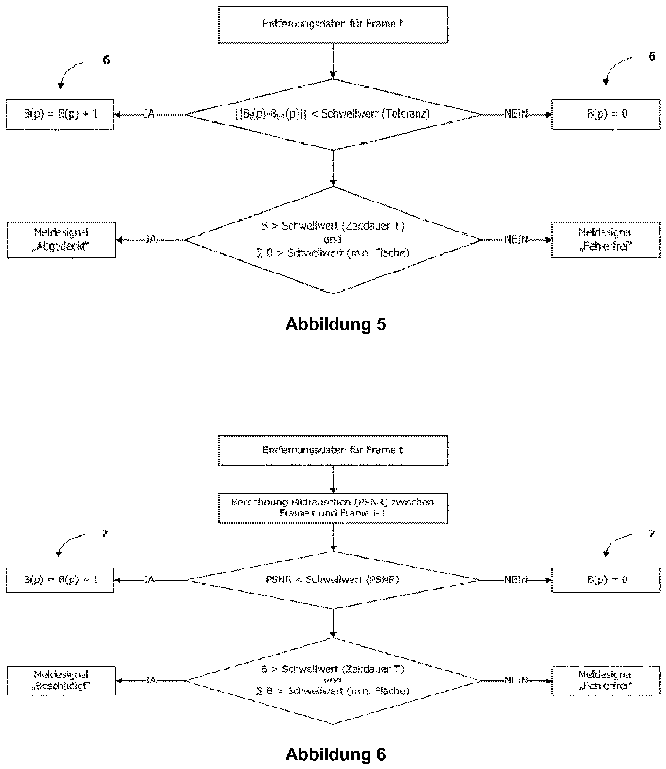

Um festzustellen, ob der TOF-Matrix-Sensor (**1**) **abgedeckt** wurde, werden folgende Stufen durchlaufen. Zur Veranschaulichung dient **Abbildung** 5.

1. Die Empfängerelemente (**4**) p mit $p \geq 0$ und $p < m \times n$ der Empfängermatrix (**3**) des aktuellen Frames t werden verglichen mit den Empfängerelementen (**4**) p der Bilddatenmatrix des vorherigen Frames t-1 (**8**). Dieser Vergleich ist äquivalent mit einer Betragsbildung der Differenz zwischen den Entfernungswerten einzelner Empfängerelemente.

2. Liegt der Betrag unterhalb einer vorgegebenen Schwelle (**9**), so wird der Bildelementzustand (**6**) für das aktuelle Empfängerelement (**4**) p um eins inkrementiert, andernfalls auf Null gesetzt. Durch den Vorgang werden lokale Zustandsänderungen innerhalb der Empfängermatrix (**3**) berücksichtigt. Dass bedeutet, dass auch Teilabdeckungen erkannt werden können. Die Empfängermatrix (**3**) wird vollständig durchlaufen.

3. Überschreitet ein Wert der Matrix des Bildelementzustands (**6**)eine vorgegebene Zeitdauer (**13**), so wird dieser Zustand gezählt. Dieser Vorgang wird für jedes Empfängerelement (**4**) der Empfängermatrix (**3**) ausgeführt.

4. Liegt die Summe der gezählten Zustände oberhalb einer eines zuvor festgelegten Schwellwertes (**12**), so wird die Meldung **"Abgedeckt"** ausgegeben. Die Auswertung dieses Meldesignals ist nicht Gegenstand des Systems.

Um festzustellen, ob der TOF-Matrix-Sensor (**1**) **beschädigt** wurde, werden folgende Stufen durchlaufen. Zur Veranschaulichung dient **Abbildung** 6.

1. Die Empfängermatrix (**3**) des aktuellen Frames t und die Empfängermatrix (3)des vorherigen Frames t-1 (**8**) werden zur Berechnung des Signal-Rausch-Abstandes (PSNR) herangezogen. Für die Berechnung des PSNR wird zuvor die mittlere quadratische Abweichung MSE (MeanSquared Error) ermittelt, die für zwei Bilder (Bt und $B_{t-1}$) folgendermaßen angegeben wird:

$$MSE = \frac{1}{m \cdot n} \sum_{x=0}^{m-1} \sum_{y=0}^{n-1} \parallel Bt(x,y) - Bt\text{-}1(x,y) \parallel^2$$

Der Signal-Rausch-Abstand PSNR lässt sich durch folgende Formel definieren, wobei $E_{max}$den maximalen Entfernungswert beider Bilder (Bt und $B_{t-1}$) darstellt:

$$PSNR[dB] = \frac{10 \cdot lg \cdot E^2max}{MSE} = \frac{20 \cdot lg \cdot Emax}{\sqrt{MSE}}$$

2. Liegt der Wert des Signal-Rausch-Abstandes (PSNR) unterhalb einer vorgegebenen Schwelle (**10**), so wird der Bildelementzustand (**7**) für das aktuelle Empfängerelement (**4**) p um eins inkrementiert, andernfalls auf Null gesetzt. Durch den Vorgang werden lokale Zustandsänderungen innerhalb der Empfängermatrix (**3**) berücksichtigt. Das bedeutet, dass auch Teilbeschädigungen erkannt werden können. Die Empfängermatrix (**3**) wird vollständig durchlaufen.

3. Überschreitet ein Wert der Matrix des Bildelementzustands (**7**) eine vorgegebene Zeitdauer (**13**), so wird dieser Zustand gezählt. Dieser Vorgang wird für jedes Empfängerelement (**4**) der Empfängermatrix (**3**) ausgeführt.

4. Liegt die Summe der gezählten Zustände oberhalb einer eines zuvor festgelegten Schwellwertes (**12**), so wird die Meldung **"Beschädigt"** ausgegeben. Die Auswertung dieses Signals ist nicht Gegenstand des Systems.

### 5. Vorteile der Erfindung

**Die Erfindung ist sehr** kostengünstig, da keine zusätzlichen Sensorelemente für die Analyse benötigt werden. Das System kann als Softwareprogramm bzw. Modul auf einem Prozessor implementiert werden.
Durch die Verwendung von Abstandsdaten gegenüber den in normalen Kameras ausschließlich vorhandenen Helligkeitsinformationen (Intensitätsdaten), erlangt man eine starke Robustheit bezüglich auftretender Helligkeitsschwankungen. Da nur Abstandsdaten betrachtet werden, ist das Erkennungssystem weitgehend unabhängig vom Reflektionsgrad der Objekte im Gesichtsfeld des Sensors.
Neben dem geringen Rechenzeitbedarf, nutzt die vorliegende Erfindung keine Heuristik zur Erkennung sowie keine Verhaltensanalyse von Objekten.
Somit ergeben sich neue Möglichkeiten, wie zum Beispiel die Fernwartung (zustandsabhängige Wartung) des Sensorsystems, wodurch der Wartungsaufwand reduziert oder Wartungszyklen optimiert werden können.
Ein weiterer Vorteil der vollautomatischen Zustandserkennung ist die Generierung einer Fehlermeldung in unmittelbarer zeitlicher Nähe zur Entstehung der Abdeckung bzw. Beschädigung. Dadurch können z. B. in öffentlichen Verkehrsmitteln vorhandenen Videoaufzeichnungen entsprechend dem Zeitpunkt der Fehlermeldung effizienter ausgewertet werden. Zum Beispiel kann dann im Fall von Vandalismus die verursachende Person leichter identifiziert werden. Dies ist insbesondere bei nur kurzzeitiger Speicherung von Videodaten von Vorteil.

### 6. Beschreibung der Zeichnungen

Die nachfolgenden Beschreibungen erläutern näher die für diese Erfindung benötigten Darstellungen. Es ist gezeigt in:

Abbildung 1:      Das Gesichtsfeld des TOF-Matrix-Sensors sowie die Darstellung der Struktur einer Empfängermatrix aus Empfängerelementen. Zur Veranschaulichung der typischen Abmessungen sind beispielhaft zwei Personen als Größenmaßstab eingezeichnet.

(fortgesetzt)

Abbildung 2: Ein Beispiel-Diagramm zur Veranschaulichung des konstanten Signalverlaufs für ein Empfängerelement (für Abdeckungen).

Abbildung 3: Ein Beispiel-Diagramm zur Veranschaulichung des konstanten Signalverlaufs für ein Empfängerelement (für Beschädigungen).

Abbildung 4: Ein Flussdiagramm zur Erkennung von Signalstörungen (Signalauswertungseinheit).

Abbildung 5: Ein Flussdiagramm für die Analyse für Abdeckungen.

Abbildung 6: Ein Flussdiagramm für die Analyse für Beschädigungen.

**Bezugszeichenliste**

1 Entfernungsmessender Sensor (TOF-Matrix-Sensor)
2 Gesichtsfeld (Sichtbereich) des Sensors
3 Empfängermatrix m x n
4 Empfängerelement p (x,y)
5 Signalauswertungseinheit
6 Zustandsmatrix für Abdeckungen der Empfängerelemente
7 Zustandsmatrix für Beschädigungen der Empfängerelemente
8 Matrix der Entfernungswerte aus der vorigen Abfrage (t-1)
9 Referenzwert für die Entfernungstoleranz [m]
10 Referenzwert für den min. Signalrauschabstand [dB]
11 Referenzwert für die max. Entfernung [m] des Gesichtsfeld des Sensors
12 Referenzwert für die min. Fläche [%] zur Erkennung von Störungen
13 Referenzwert für die max. Zeitdauer [s] zur Erkennung von Störungen

**Patentansprüche**

1. Optischer Sensor nach dem Lichtlaufzeit-Prinzip zur Erfassung dreidimensionaler Szenen und ihrer zeitlichen Änderung mit mindestens einem Sendeelement und einer Empfängermatrix (3) aus mehreren Empfängerelementen (4), mit einer Signalauswertungseinheit (5) zur Interpretation und Bewertung der Sensorsignale als Entfernungswerte liefernde Entfernungssignale für jedes Empfängerelement sowie mit einer Schnittstelle zur Ausgabe der Bewertungsergebnisse,
wobei

- die Signalauswertungseinheit (5) ausgebildet ist, eine Erkennung von Beschädigungen und Bedeckungen des Sensors durch Bewertung der Entfernungssignale von mehreren Empfängerelementen hinsichtlich ihres jeweiligen Entfernungswertes und ihrer zeitlichen Veränderung im Vergleich mit vorher ermittelten Referenzwerten und/oder örtlichen Referenzmustern auszuführen und das Ergebnis als Information über die Gültigkeit des Nutzsignals des Sensors über die Schnittstelle auszugeben und wobei
- der optische Sensor ausgebildet ist, zwischen einer Abdeckung und einer Beschädigung der optischen Fläche des Sensors zu unterscheiden, indem für die jeweilige Störungsart die zeitliche Veränderung der Entfernungswerte der Empfängerelemente (4) der Empfängermatrix (3) als Zustandsinformation vorliegend ausgewertet und für die Unterscheidung herangezogen wird,

- wobei eine Abdeckung erkannt wird, wenn ein Betrag der Differenz zwischen den Entfernungswerten eines jeweiligen Empfängerelements gemessen über eine festgelegte Zeitdauer T unterhalb einer vorgegebenen Schwelle liegt, wobei ein Betrag der Differenz zwischen den Entfernungswerten eines jeweiligen Empfängerelements für jedes Empfängerelement (4) der Empfängermatrix (3) bestimmt und eine Abdeckung erkannt wird, wenn die Summe der Empfängerelemente, deren Betrag der Differenz zwischen den Entfernungswerten über die festgelegte Zeitdauer T unterhalb der vorgegebenen Schwelle liegt, oberhalb einer eines zuvor festgelegten Schwellwertes (12) liegt,
und
- wobei eine Beschädigung erkannt wird, wenn ein Signal-Rausch-Abstand PSNR unterhalb einer vorgegebenen Schwelle liegt, wobei der Signal-Rausch-Abstand PSNR bestimmt wird, indem die Entfernungswerte der Empfängerelemente x,y (4) der Empfängermatrix (**3**) eines aktuellen Abstandsbildes Bt und die Entfernungswerte der Empfängerelemente (4) der Empfängermatrix (**3**) eines vorherigen Abstandsbildes $B_{t-1}$ (**8**) zur Berechnung des Signal-Rausch-Abstandes PSNR herangezogen werden und zunächst die mittlere quadratische Abweichung, Mean Squared Error, MSE, wie folgt ermittelt wird:

$$MSE = \frac{1}{m \cdot n} \sum_{x=0}^{m=1} \sum_{y=0}^{n=1} \parallel Bt(x,y) - Bt\text{-}1(x,y) \parallel^2$$

und anschließend der Signal-Rausch-Abstand durch die folgende Formel bestimmt wird, wobei $E_{max}$ den maximalen Entfernungswert beider Abstandsbilder $B_t$ und $B_{t-1}$ darstellt:

$$PSNR[dB] = \frac{10 \cdot lg \cdot E^2 max}{MSE} = \frac{20 \cdot lg \cdot Emax}{\sqrt{MSE}}$$

2. Optischer Sensor nach Anspruch 1, wobei die Signalauswertungseinheit (5) ausgebildet ist, die Bewertung der Sensorsignale als Entfernungswerte liefernde Entfernungssignale zur Gewinnung örtlicher und zeitlicher Zustandsinformationen durchzuführen, welche zusammen mit einem zuvor aufgenommenen Abstandsbild (t-1) in der Signalauswertungseinheit gespeichert und dann für spätere Vergleiche mit vorgegebenen Referenzen herangezogen werden.

3. Optischer Sensor nach mindestens einem der vorstehenden Ansprüche, wobei der optische Sensor ausgebildet ist, zwischen einer vollständigen oder partiellen Abdeckung des Sensors zu unterscheiden, indem für die jeweilige Störungsart die örtliche Verteilung der Zustandsinformation untersucht und mit zuvor definierten Referenzwerten und/oder örtlichen Referenzmustern verglichen wird.

4. Optischer Sensor nach mindestens einem der vorstehenden Ansprüche, wobei der optische Sensor ausgebildet ist, eine Bewertung der dreidimensionalen Szene zur Bestimmung der Personenanzahl im Gesichtsfeld oder zur Zählung von Personen mit vorher definierten Bewegungsrichtungen vorzunehmen.

5. Überwachungssystem zur Überwachung eines Raumbereichs, mit mindestens einem optischen Sensor gemäß einem der vorstehenden Ansprüche, mindestens einer Videokamera und einer Auswerteeinheit, welche den Meldungen des Sensors und den Videoaufzeichnungen der Kamera Zeitmarken zuordnet, wobei das Überwachungssystem ausgebildet ist, die Fehlermeldungen infolge von Abdeckung und Beschädigung des Sensors in zeitliche Korrelation zu aufgezeichneten Videodaten zu bringen und eine Zuordnung von einem eine Beschädigung des Sensors anzeigenden Signals zu einer zeitlich begrenzten Videoaufnahme zu erzeugen.

6. Verfahren zur Erkennung von Beschädigungen und Bedeckungen eines Sensors mit mindestens einem Sendeelement und einer Empfängermatrix (3) aus mehreren Empfänger-Elementen (4), das die folgenden Schritte umfasst:

   - Bewertung der Entfernungssignale von mehreren Empfängerelementen hinsichtlich ihres jeweiligen Entfernungswertes und ihrer zeitlichen Veränderung im Vergleich mit vorher ermittelten Referenzwerten und/oder örtlichen Referenzmustern und

     - Ausgeben des Bewertungsergebnisses als Information über die Gültigkeit des Nutzsignals des Sensors über eine Schnittstelle,
     - wobei zwischen einer Abdeckung und einer Beschädigung der optischen Fläche des Sensors unterschieden wird, indem für die jeweilige Störungsart die zeitliche Veränderung der Entfernungswerte der Empfängerelemente (4) der Empfängermatrix (3) als Zustandsinformation vorliegend ausgewertet und für die Unterscheidung herangezogen wird,
     - wobei eine Abdeckung erkannt wird, wenn ein Betrag der Differenz zwischen den Entfernungswerten eines jeweiligen Empfängerelements gemessen über eine festgelegte Zeitdauer T unterhalb einer vorgegebenen Schwelle liegt, wobei ein Betrag der Differenz zwischen den Entfernungswerten eines jeweiligen Empfängerelements für jedes Empfängerelement (4) der Empfängermatrix (3) bestimmt und eine Abdeckung erkannt wird, wenn die Summe der Empfängerelemente, deren Betrag der Differenz zwischen den Entfernungswerten über die festgelegte Zeitdauer T unterhalb der vorgegebenen Schwelle liegt, oberhalb einer eines zuvor festgelegten Schwellwertes (**12**) liegt
und
- wobei eine Beschädigung erkannt wird, wenn ein Signal-Rausch-Abstand PSNR unterhalb einer vorgegebenen Schwelle liegt, wobei der Signal-Rausch-Abstand PSNR bestimmt wird, indem die Entfernungswerte der Empfängerelemente x,y (**4**) der Empfängermatrix (**3**) eines aktuellen Abstandsbildes Bt und die Entfernungswerte der Empfängerelemente (**4**) der Empfängermatrix (**3**) eines vorherigen Abstandsbildes $B_{t-1}$ (**8**) zur Berechnung des Signal-Rausch-Abstandes herangezogen werden und zunächst die mittlere quadratische Abweichung MSE wie folgt ermittelt wird:

$$MSE = \frac{1}{m \cdot n} \sum_{x=0}^{m-1} \sum_{y=0}^{n-1} \parallel Bt(x,y) - Bt\text{-}1(x,y) \parallel^2$$

und anschließend der Signal-Rausch-Abstand durch die folgende Formel bestimmt wird, wobei $E_{max}$ den maximalen Entfernungswert beider Abstandsbilder $B_t$ und $B_{t-1}$ darstellt:

$$PSNR[dB] = \frac{10 \cdot lg \cdot E^2 max}{MSE} = \frac{20 \cdot lg \cdot Emax}{\sqrt{MSE}}$$

**Claims**

1. Optical sensor based on the time-of-flight principle for detecting three-dimensional scenes and their change over time, said optical sensor having at least one transmitter element and a receiver matrix (3) comprising a plurality of receiver elements (4), said optical sensor further having a signal evaluation unit (5) for interpreting and evaluating the sensor signals as distance signals providing distance values for each receiver element, and an interface for outputting the evaluation results,
wherein

- the signal evaluation unit (5) is designed to perform a detection of damages and coverages of the sensor by evaluating the distance signals of several receiver elements with regard to their respective distance value and their change over time in comparison with previously determined reference values and/or local reference patterns and to output the result as information on the validity of the useful signal of the sensor via the interface, and wherein
- the optical sensor is designed to differentiate between coverage and damage to the optical surface of the sensor by analysing the temporal change in the distance values of the receiver elements (4) of the receiver matrix (3) as status information for the respective type of interference and using this information for the differentiation,

- wherein a coverage is recognised when an amount of the difference between the distance values of a respective receiver element measured over a fixed period of time T is below a predetermined threshold, wherein an amount of the difference between the distance values of a respective receiver element is determined for each receiver element (**4**) of the receiver matrix (**3**) and a coverage is recognised, if the sum of the receiver elements whose amount of the difference between the distance values over the specified time period T is below the specified threshold is above a previously specified threshold value (**12**), and
- wherein damage is recognised if a signal-to-noise ratio PSNR is below a predetermined threshold, the signal-to-noise ratio PSNR being determined by comparing the distance values of the receiver elements x, y (**4**) of the receiver matrix (**3**) of a current distance image Bt and the distance values of the receiver elements (**4**) of the receiver matrix (**3**) of a previous distance image $B_{t-1}$ (**8**) are used to calculate the signal-to-noise ratio PSNR and the mean squared error, MSE, is first determined as follows:

$$MSE = \frac{1}{m \cdot n} \sum_{x=0}^{m-1} \sum_{y=0}^{n-1} \| Bt(x,y) - Bt\text{-}1(x,y) \|^2$$

and then the signal-to-noise ratio is determined using the following formula, where $E_{max}$ represents the maximum distance value of both distance images Bt and $B_{t\text{-}1}$:

$$PSNR[dB] = \frac{10 \cdot lg \cdot E^2 max}{MSE} = \frac{20 \cdot lg \cdot Emax}{\sqrt{MSE}}$$

2. Optical sensor according to claim 1,
   wherein the signal evaluation unit (5) is designed to perform the evaluation of the sensor signals as distance signals that provide distance values for obtaining local and temporal status information, which is stored together with a previously recorded distance image (t-1) in the signal evaluation unit and then used for subsequent comparisons with predetermined references.

3. Optical sensor according to at least one of the preceding claims,
   wherein the optical sensor is designed to differentiate between complete or partial coverage of the sensor by analysing the local distribution of the status information for the respective type of interference and comparing it with previously defined reference values and/or local reference patterns.

4. Optical sensor according to at least one of the preceding claims,
   wherein the optical sensor is designed to evaluate the three-dimensional scene to determine the number of persons in the field of vision or to count persons with previously defined directions of movement.

5. Monitoring system for monitoring a room area, having at least one optical sensor according to one of the preceding claims, at least one video camera and an evaluation unit which assigns time stamps to the messages from the sensor and the video recordings from the camera,
   wherein the monitoring system is designed to correlate the error messages resulting from coverage and damage to the sensor with recorded video data and to generate an assignment of a signal indicating damage to the sensor to a time-limited video recording.

6. Method for detecting damage and coverage of a sensor having at least one transmitter element and a receiver matrix (3) comprising a plurality of receiver elements (4), comprising the following steps:

   - evaluation of the distance signals from several receiver elements with regard to their respective distance value and their change over time in comparison with previously determined reference values and/or local reference patterns, and

   - outputting the evaluation result as information on the validity of the sensor's useful signal via an interface,
   - wherein a distinction is made between coverage and damage to the optical surface of the sensor by analysing the temporal change in the distance values of the receiver elements (4) of the receiver matrix (3) as status information for the respective type of interference and using this information to make the distinction,
   - wherein a coverage is recognised when an amount of the difference between the distance values of a respective receiver element measured over a predetermined time period T is below a predetermined threshold, wherein an amount of the difference between the distance values of a respective receiver element is determined for each receiver element (4) of the receiver matrix (3) and a coverage is recognised when the sum of the receiver elements whose amount of the difference between the distance values over the predetermined time period T is below the predetermined threshold is above a predetermined threshold value (12)
   and
   - wherein damage is recognised when a signal-to-noise ratio PSNR is below a predetermined threshold, wherein the signal-to-noise ratio PSNR is determined by comparing the distance values of the receiver elements x, y (4) of the receiver matrix (3) of a current distance image Bt and the distance values of the receiver elements (4) of the receiver matrix (3) of a previous distance image $B_{t\text{-}1}$ (8) are used to calculate the signal-to-noise ratio and the mean square deviation MSE is first determined as follows:

$$MSE = \frac{1}{m \cdot n} \sum_{x=0}^{m-1} \sum_{y=0}^{n-1} \| Bt(x,y) - Bt\text{-}1(x,y) \|^2$$

and then the signal-to-noise ratio is determined using the following formula, where $E_{max}$ represents the maximum distance value of both distance images Bt and $B_{t-1}$:

$$PSNR[dB] = \frac{10 \cdot lg \cdot E^2 max}{MSE} = \frac{20 \cdot lg \cdot Emax}{\sqrt{MSE}}$$

**Revendications**

1. Capteur optique suivant le principe du temps de parcours de la lumière pour la détection de scènes en trois dimensions et leur modification dans le temps comprenant au moins un élément d'émission et une matrice (3) de récepteur composée de plusieurs éléments (4) de récepteur, comprenant une unité (5) d'analyse du signal pour l'interprétation et l'évaluation des signaux du capteur comme signaux d'éloignement fournissant des valeurs d'éloignement pour chaque élément du récepteur ainsi que comprenant une interface d'émission des résultats de l'évaluation, dans lequel

   - l'unité (5) d'analyse du signal est constituée pour effectuer une détection d'endommagements et de recouvrements du capteur en évaluant les signaux d'éloignement de plusieurs éléments du récepteur relativement à leur valeur d'éloignement respective et à leur modification dans le temps par rapport à des valeurs de référence déterminées à l'avance et/ou à des modèles de référence dans l'espace et pour émettre par l'interface le résultat comme information sur la validité du signal utile du capteur et dans lequel
   - le capteur optique est constitué pour distinguer entre un recouvrement et un endommagement de la surface optique du capteur en analysant en l'espèce comme information d'état la modification dans le temps des valeurs d'éloignement des éléments (4) de récepteur de la matrice (3) de récepteur et en en tirant parti pour la distinction,

   - dans lequel on reconnaît un recouvrement si un montant de la différence entre les valeurs d'éloignement d'un élément respectif de récepteur, mesurées sur une durée T fixée, est en-dessous d'un seuil donné à l'avance, dans lequel on détermine un montant de la différence entre les valeurs d'éloignement d'un élément respectif de récepteur pour chaque élément (**4**) de récepteur de la matrice (**3**) de récepteur et on détecte un recouvrement, si la somme des éléments de récepteur, dont le montant de la différence entre les valeurs d'éloignement, sur la durée T fixée, est en-dessous du seuil donné à l'avance, est au-dessus d'une valeur (**12**) de seuil fixée à l'avance, et
   - dans lequel on détecte un endommagement, si une distance signal-bruit PSNR est en-dessous d'un seuil donné à l'avance, dans lequel on détermine la distance signal-bruit PSNR en tirant parti des valeurs de différence des éléments x, y (4) de récepteur de la matrice (**3**) de récepteur d'une image $B_t$ de distance en cours et des valeurs d'éloignement des éléments (4) de récepteur de la matrice (**3**) de récepteur d'une image $B_{t-1}$ (**8**) de distance précédente pour le calcul de la distance signal-bruit PSNR et on détermine d'abord l'écart quadratique moyen, mean squared error, MSE, de la manière suivante :

$$MSE = \frac{1}{m \cdot n} \sum_{x=0}^{m-1} \sum_{y=0}^{n-1} \| Bt(x,y) - Bt\text{-}1(x,y) \|^2$$

et ensuite on détermine la distance signal-bruit par la formule suivante, dans laquelle $E_{max}$ représente la valeur d'éloignement maximum des deux images $B_t$ et $B_{t-1}$ de distance :

$$PSNR[dB] = \frac{10 \cdot lg \cdot E^2 max}{MSE} = \frac{20 \cdot lg \cdot Emax}{\sqrt{MSE}}$$

**2.** Capteur optique suivant la revendication 1,
dans lequel l'unité (5) d'analyse du signal est constituée pour effectuer l'évaluation des signaux du capteur comme signaux d'éloignement fournissant des valeurs d'éloignement pour l'obtention d'informations d'état spatiales et temporelles, que l'on met en mémoire dans l'unité d'analyse du signal ensemble avec une image (t-1) de distance enregistrée à l'avance et dont on tire parti ensuite pour des comparaisons ultérieures à des références données à l'avance.

**3.** Capteur optique suivant au moins l'une des revendications précédentes,
dans lequel le capteur optique est constitué pour distinguer entre un recouvrement complet ou partiel du capteur en examinant pour le type de perturbation respectif la répartition dans l'espace de l'information d'état et en la comparant à des valeurs de référence définies à l'avance et/ou à des modèles de références dans l'espace.

**4.** Capteur optique suivant au moins l'une des revendications précédentes,
dans lequel le capteur optique est constitué pour effectuer une évaluation des scènes en trois dimensions pour la détermination du nombre de personnes dans le champ de vision ou pour le comptage des personnes ayant des directions de déplacement définies à l'avance.

**5.** Système de contrôle pour le contrôle d'une région de l'espace, comprenant au moins un capteur optique suivant l'une des revendications précédentes, au moins une caméra vidéo et une unité d'analyse, qui affecte des estampilles temporelles aux messages du capteur et aux enregistrements vidéos,
dans lequel le système de contrôle est constitué pour mettre les messages d'erreur en raison de recouvrement et d'endommagement du capteur en corrélation temporelle avec des données vidéos enregistrées et pour produire une affectation d'un signal indiquant un endommagement du capteur à un enregistrement vidéo limité dans le temps.

**6.** Procédé de détection d'endommagements et de recouvrements d'un capteur comprenant au moins un élément d'émission et une matrice (3) de récepteur composée de plusieurs éléments (4) de récepteur, qui comprend les stades suivants :

- évaluation des signaux d'éloignement de plusieurs éléments du récepteur relativement à leur valeur d'éloignement respective et à leur modification dans le temps par rapport à des valeurs de référence déterminées à l'avance et/ou à des modèles de référence dans l'espace et
- émission par une interface du résultat de l'évaluation comme information sur la validité du signal utile du capteur,

- dans lequel on distingue entre un recouvrement et un endommagement de la surface optique du capteur en analysant en l'espèce comme information d'état la modification dans le temps des valeurs d'éloignement des éléments (4) de récepteur de la matrice (3) de récepteur et en en tirant parti pour la distinction,
- dans lequel on reconnaît un recouvrement, si un montant de la différence entre les valeurs d'éloignement d'un élément respectif de récepteur, mesurées sur une durée T fixée, est en-dessous d'un seuil donné à l'avance, dans lequel on détermine un montant de la différence entre les valeurs d'éloignement d'un élément respectif de récepteur pour chaque élément (4) de récepteur de la matrice (3) de récepteur et on détecte un recouvrement, si la somme des éléments de récepteur, dont le montant de la différence entre les valeurs d'éloignement sur la durée T fixée, est en-dessous du seuil donné à l'avance, est au-dessus d'une valeur (12) de seuil fixée à l'avance
et
- dans lequel on détecte un endommagement, si une distance signal-bruit PSNR est en-dessous d'un seuil donné à l'avance, dans lequel on détermine la distance signal-bruit PSNR en tirant parti des valeurs de différence des éléments x, y (4) de récepteur de la matrice (3) de récepteur d'une image $B_t$ de distance en cours et des valeurs d'éloignement des éléments (4) de récepteur de la matrice (3) de récepteur d'une image $B_{t-1}$ (8) de distance précédente pour le calcul de la distance signal-bruit et on détermine d'abord l'écart quadratique moyen MSE de la manière suivante :

$$MSE = \frac{1}{m \cdot n} \sum_{x=0}^{m-1} \sum_{y=0}^{n-1} \| Bt(x,y) - Bt\text{-}1(x,y) \|^2$$

et ensuite on détermine la distance signal-bruit par la formule suivante, dans laquelle $E_{max}$ représente la valeur d'éloignement maximum des deux images $B_t$ et $B_{t-1}$ de distance :

$$PSNR[dB] = \frac{10 \cdot lg \cdot E^2 max}{MSE} = \frac{20 \cdot lg \cdot Emax}{\sqrt{MSE}}$$

$$PSNR[dB] = \frac{10 \cdot lg \cdot E^2 max}{MSE} = \frac{20 \cdot lg \cdot Emax}{\sqrt{MSE}}$$

Abbildung1

Beispiel-Empfängerelement (x,y)

Abbildung 2

Beispiel-Empfängerelement (x,y)

Abbildung 3

**5**

Entfernungsdaten für Frame t

Analyseeinheit für Abdeckungen

Analyseeinheit für Beschädigungen

Zustandsinformationen für
Abdeckungen (**6**)

Zustandsinformationen für
Beschädigungen (**7**)

Zeitdauer T (**13**)
überschritten ?

Zeitdauer T (**13**)
überschritten ?

JA

NEIN

NEIN

JA

Meldesignal
„**Abgedeckt**"

Meldesignal
„**Fehlerfrei**"

Meldesignal
„**Fehlerfrei**"

Meldesignal
„**Beschädigt**"

Kopie der Entfernungsdaten Frame t zu Frame t-1 (**8**)

**Abbildung 4**

Entfernungsdaten für Frame t

6

B(p) = B(p) + 1 ◄—JA— $||B_t(p)-B_{t-1}(p)|| <$ Schwellwert (Toleranz) —NEIN► B(p) = 0

6

Meldesignal „Abgedeckt" ◄—JA— B > Schwellwert (Zeitdauer T) und $\Sigma$ B > Schwellwert (min. Fläche) —NEIN► Meldesignal „Fehlerfrei"

**Abbildung 5**

Entfernungsdaten für Frame t

Berechnung Bildrauschen (PSNR) zwischen Frame t und Frame t-1

7

B(p) = B(p) + 1 ◄—JA— PSNR < Schwellwert (PSNR) —NEIN► B(p) = 0

7

Meldesignal „Beschädigt" ◄—JA— B > Schwellwert (Zeitdauer T) und $\Sigma$ B > Schwellwert (min. Fläche) —NEIN► Meldesignal „Fehlerfrei"

**Abbildung 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006045916 B4
- DE 102004015040 A1
- EP 1507138 B1
- DE 10261923 A1
- DE 19530289 A1
- EP 1672604 A1
- DE 102007000344 A1
- WO 0057381 A1
- DE 19603935 A1
- EP 2372389 A1
- US 2006251293 A1
- EP 2073035 A1